# EUROPEAN PATENT SPECIFICATION

(11) **EP 2 627 722 B1**
(45) Date of publication and mention of the grant of the patent: **04.05.2016**
(21) Application number: 10768010.0
(22) Date of filing: 14.10.2010
(51) Int. Cl.: C09D 167/00

(54) **SURFACE COVERING COMPRISING A VARNISH LAYER**
OBERFLÄCHENBESCHICHTUNG MIT EINER LACKSCHICHT
REVÊTEMENT DE SURFACE COMPRENANT UNE COUCHE DE VERNIS

(43) Date of publication of application: 21.08.2013
(73) Proprietor: Tarkett GDL, 9779 Lentzweiler (LU)
(72) Inventor: DAO VIET, Dung, B-4920 Aywaille (BE); PERES, Richard, B-6600 Bastogne (BE)
(74) Representative: Van Malderen, Joëlle
(86) International application number: PCT/EP2010/065431
(87) International publication number: WO 2012/048747

(56) References cited:
- EP-A1- 1 164 149
- EP-A1- 1 488 921
- DE-A1-102007 011 553

## Description

### Field of the invention

The present invention relates to a PVC-based surface covering, more specifically to a PVC-based surface comprising a varnish layer as a top coating, and to a method to produce such a surface covering.

### Prior art and related technical background

Surface coverings, particularly PVC-based surface coverings, are known as "resilient" coverings and are widely used to decorate buildings or houses surfaces.

Such resilient surface coverings offer a good compromise in aesthetic and performances aspects, but they do not provide extra mechanical and chemical resistance properties. Generally the mechanical, chemical, moisture and stain resistance properties are commonly provided by surface treatments, and more particularly by chemical or radiation curing treatments.

Radiation curing surface treatments may commonly be used to enhance aesthetic aspect of surface coverings, but more important they are generally used to enhance resistance to mechanical stress, to chemicals and moisture.

For example, EP 1 164 149 discloses a varnish layer of acrylate-based composition which is cured by UV radiations.

However, PVC-based surface coverings, present the drawback of releasing VOCs (Volatile Organic Compounds) which are, for many of them, toxic components. Indeed, PVC-based surface coverings comprise PVC resins, plasticizers and stabilizers which contribute for part of them to VOC emission. Furthermore, for PVC-based surface coverings produced by coating technology, which represent the main part of produced articles, special additives, such as viscosity reducers, are used as processing helps, the most efficient viscosity reducers being low molecular weight molecules (lower then C₁₆). Such special additives contribute also to VOCs emission.

To address this issue, it was suggested to replace the volatile materials by non-volatile materials. However this leads to an important decrease of stiffness of the surface covering as the non-volatile materials have low volatility at process temperature while stiffness is an important requirement for resilient surface coverings, especially for floor coverings.

It was also suggested to incorporate in PVC-based surface coverings a gas barrier layer made of PVOH, EVOH or PVdC to inhibit or reduce the VOCs release. However, such gas barrier layer provides no or poor mechanical or stain resistance to surface covering and furthermore adhesion of these barrier layers to PVC-based substrate is main issue.

An acrylate-based photocured varnish layer applied on the top surface of a surface covering may prevent the emissions of a part or the majority of VOCs; however, it is difficult to apply such a coating uniformly on finished products having sharp or deep surface embossing. Moreover, when the covering is installed in heavy traffic areas for a long time, the varnish layer can be worn out and VOCs may be released again. Furthermore, to offer a good protection in an aggressive environment (heavy traffic, chemical attack, soiling...), a thick varnish layer (thickness higher than 20 µm) is generally required. The consequence is an increase of production costs and brittleness of the surface covering.

Gloss is an important parameter for aesthetic appearance of surface covering. It is generally measured at an angle of incidence from a line drawn perpendicular to the surface of 60°.

Gloss varies from very low gloss (1 to 5 at 60°) to regular gloss (15 to 20 at 60°) and high gloss (higher than 70 at 60°). To achieve the desired level of gloss, a matting agent, mainly silica powder, is added to the varnish layer formulation. Generally a high amount of the matting agent allows to obtain a very low gloss, but leading in return to a decrease of the mechanical properties of the varnish layer. In particular, regarding to photocured acrylate-based formulations, because of the very high curing speed, low gloss is very difficult to obtain.

US 5888617 describes a method for the production of a matted surface by using acrylate or epoxide formulation cured by UV radiation of a wavelength of 172 nm. However even if very low gloss (lower than 5) can be obtained, higher gloss cannot be obtained with such technique.

Acoustic properties, such as for example sound absorption and dampening, are desired for PVC-based surface coverings. Good acoustic performances can be obtained with special back foam layer in a multilayer surface covering. However a good acoustic is obtained to the expense of lower indentation performance. This phenomenon is known as the indentation-acoustic compromise. A solution to come to this compromise is to combine a foamed layer with a layer of high modulus, which may for example be a cured varnish layer known to present a high modulus. However with existing curing technologies, only moderate high modulus could be obtained.

Therefore, there is no solution to provide a surface covering, economic to produce and having mechanical, stain and chemicals resistance properties, having gas barrier properties and having a wide range of gloss, and in particular no solution exists to provide a top coating providing such properties.

### Aims of the invention

The present invention aims to provide a PVC-based surface covering and a method to produce such a surface covering that does not have the drawbacks of the prior art.

The invention aims to provide a PVC-based surface covering having mechanical, stain and chemicals resistance properties, having gas barrier properties and having a controlled gloss.

The invention aims to provide a PVC-based surface covering which reaches a compromise between good acoustic and good indentation performances.

The invention aims to provide a PVC-based surface covering comprising a top coating which is an alternative to conventional UV cured acrylate-based coatings.

### Summary of the invention

The present invention relates to a method to produce a PVC-based surface covering comprising a varnish layer, said method comprising the steps of providing a PVC-based surface covering, providing a varnish composition comprising a polyester acrylate resin and a polyester polyol resin, or a polyester resin comprising acrylate and polyol functions, or a polyester acrylate resin with grafted hydroxyl groups, a reactive thinner and at least one photo-initiator, applying said varnish composition on said PVC-based surface covering to form a varnish layer having a thickness of between 5 and 15µm, partially curing said varnish composition over a thickness of 0.1 to 0.3 µm using a monochromatic radiation having a wavelength comprised between 170 to 174 nm to form a partially cured varnish layer, and further curing said varnish composition over the remaining thickness of said varnish layer using a ultraviolet radiation having a wavelength comprised between 200 and 320 nm.

According to particular embodiments, the method according to the invention may comprise one, or a combination, of any of the following characteristics:
- the varnish composition comprises a least one reticulation activator of the varnish composition,
- the varnish composition comprises a least one additive to adjust the gloss level of the varnish layer,
- the varnish composition comprises at least one filler and/or at least one wetting agent,
- the polyester acrylate resin and the polyester polyol resin, or the polyester resin comprising acrylate and polyol functions, or the polyester acrylate resin with grafted hydroxyl groups represent between 40 and 60% in weight of the total weight of the varnish composition,
- the reactive thinner represents between 40 and 60% in weight of the total weight of the varnish composition,
- the photo-initiator represents 0.1 and 20% in weight of the total weight of the varnish composition,
- the varnish composition has a viscosity of between 0.2 to 1.0 Pas,
- the varnish composition is applied on said PVC-based surface covering at a weight comprised between 5 to 20 g/m²,
- the step of further curing the varnish composition over the remaining thickness is performed using a ultraviolet radiation having a wavelength of around 240 nm,
- the PVC-based material is a multiple layer material comprising a PVC-based support layer, a PVC-based wear layer, and preferably a decorative layer.

The present invention also relates to a PVC-based surface covering comprising a varnish layer overlying said PVC-based surface covering, said varnish layer comprising a network of polyester acrylate and a polyester polyol resin, or of a polyester resin comprising acrylate and polyol functions, or of a polyester acrylate resin with grafted hydroxyl groups, said varnish layer having a reticulation level of between 90 to 95% over a thickness of 0.1 to 0.3µm, and having a gloss level, measured at 60 degrees, of between 3 to 30.

According to particular embodiments, the surface covering according to the invention may comprise one, or a combination, of any of the following characteristics:
- the PVC-based surface covering comprises a PVC-based support layer, a decorative layer overlying said support layer and a PVC-based wear layer overlying said decorative layer,
- the PVC-based support layer is a foamed layer.

### Short description of the drawings

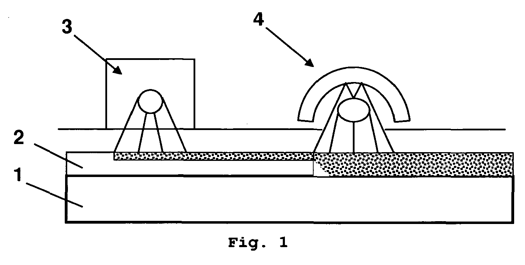

Figure 1 represents schematically the varnish layer curing step of the method according to the invention.

### Detailed description of the invention

The ability to produce a surface covering having mechanical, stain and chemicals resistance properties, having gas barrier properties, having a controlled gloss, and which reaches a compromise between good acoustic and good indentation performances is very desirable.

According to the invention, a PVC-based material 1, preferably a PVC-based surface covering, is coated using any suitable method, with a varnish composition to form a varnish layer 2, having a thickness of between 5 and 15 µm, over the upper surface of a PVC-based material.

The varnish composition may be applied using spray coating, Mayer bar coating, roll coating, screen printing, flexo printing or rotogravure printing.

The coating weight of the varnish composition applied on a wear layer of a surface covering is preferably comprised between 5 to 20 g/m².

The PVC-based material 1 is any suitable material to produce a surface covering. The PVC-based material may be a unique layer, but preferably, it comprises a PVC-based support layer and a PVC-based wear layer overlying said PVC-based support layer. More preferably the PVC-based material comprises a decorative layer overlying the support layer and/or a decorative layer between the PVC-based support layer and the PVC-based wear layer.

In preferred embodiments, the PVC-based material 1 may further comprise a backing layer onto which the PVC-based support layer is overlaid.

In preferred embodiments, the PVC-based support layer is a foamed layer.

The varnish composition according to the invention comprises a polyester acrylate resin and a polyester polyol resin, or more preferably a polyester resin comprising acrylate and polyol functions, or polyester acrylate resin with grafted hydroxyl groups. Preferably the polyester resin or polyester resins represent between 40 and 60% in weight of the total weight of the varnish composition.

The varnish composition further comprises a reactive thinner, also known as compound suitable to adjust the viscosity.

In a preferred embodiment, the reactive thinner is an acrylate monomer, mono or polyfunctional, like for example isobornyl acrylate, hexanedioldiacrylate, propoxylated glycerol triacrylate (OTA^{®} 480 from Cytec), triacrylate or tetraacrylate like alkoxylated pentaerythritol tetraacrylate (Ebecryl^{®} 40 from Cytec). The reactive thinner represents between 20 and 40% of the total weight of the varnish composition.

Preferably, the final viscosity of the varnish composition is comprised between 0.2 to 1.0 Pas.

The varnish composition further comprises a photo-initiator which represents between 0.1 and 20% in weight of the total weight of the varnish composition.

The varnish composition may further comprise at least one reticulation activator to adjust the curing speed of the varnish composition, or at least one additive to adjust the gloss level of the varnish layer. The at least one reticulation activator or at least one additive may represent in weight between 20 to 40% of the total weight of the varnish composition.

In a preferred embodiment, the reticulation activator of the varnish composition is a polyfunctional acrylate monomer, like for example PETA (pentaerythritol triacrylate) or PETTA (pentaerythritol tetracrylate).

In a preferred embodiment, the additive to adjust the gloss level of the varnish layer is of the same nature as the reactive thinner. Therefore, it can be an acrylate monomer mono or polyfunctional like isobornyl acrylate, hexaneDioldiacrylate, propoxylated glycerol triacrylate (OTA^{®} 480 from Cytec), triacrylate or tetraacrylate like alkoxylated pentaerythritol tetraacrylate (Ebecryl^{®} 40 from Cytec).

The varnish composition may further comprise at least one filler, or a mixture of filler, and/or a wetting agent, which may represent in weight between 3 and 15% of the total weight of the varnish composition.

The at least one filler is preferably silica, alumina or polyamide particles.

Compositions used as comparative examples, being polyurethane-based varnish compositions, are given in table 1. The proportion of each compound is given in percentage in weight of the total weight of the composition.

**Table 1: Urethane Acrylate based compositions.**

| | F1 | F2 | F3 |
|---|---|---|---|
| Urethane acrylate oligomer | 50 | 55 | 60 |
| Reactive thinner | 30 | 25 | 20 |
| Curing speed adjuster | 10 | 10 | 10 |
| Photoinitiator | 2 | 2 | 2 |
| Wetting agent | 0.5 | 0.5 | 0.5 |
| Matting agent | 7.5 | 7.5 | 7.5 |

In table 1, as an example, the urethane acrylate oligomer is Desmolux^{®} U100 from Bayer, the reactive thinner is an hexane diol diacrylate, for example Sartomer SR 238 from Cray Valley, the curing speed adjuster is an ethoxylated pentaerythritol tetraacrylate, for example Miramer 4004 from Rahn, the photoinitiator is Irgacure^{®} 184 from Ciba, the wetting agent is silicone, for example Byk 307 from Byk, and the matting agent is silica, for example Syloid^{®} RAD 2005 from Grace.

Examples of varnish compositions according to the invention are given in table 2.

**Table 2: Polyester-based varnish composition.**

| | F4 | F5 | F6 | F7 |
|---|---|---|---|---|
| polyester acrylate | 50 | 47.5 | 45 | -- |
| polyester polyol | 10 | 7.5 | 5 | -- |
| polyester acrylate with grafted hydroxyl groups | -- | -- | -- | 60 |
| Reactive thinner | 20 | 25 | 30 | 20 |
| Curing speed adjuster | 10 | 10 | 10 | 10 |
| photoinitiator | 2 | 2 | 2 | 2 |
| wetting agent | 0.5 | 0.5 | 0.5 | 0.5 |
| matting agent | 3 | 3 | 3 | 3 |

In table 2, as an example, the polyester acrylate is Desmolux^{®} XP 2744 from Bayer, or a polyester acrylate with grafted hydroxyl groups and is for example Desmolux^{®} FW 5094 from Bayer, the polyester polyol is Desmophen^{®} FW 1652 from Bayer, the reactive thinner is an hexane diol diacrylate, for example Sartomer SR 238 from Cray Valley, the curing speed adjuster is an ethoxylated pentaerythritol tetraacrylate, for example Miramer 4004 from Rahn, the photoinitiator is Irgacure^{®} 184 from Ciba, the wetting agent is silicone, for example Byk 307 from Byk, and the matting agent is silica, for example Syloid^{®} RAD 2005 from Grace.

The polyester acrylate, having a molecular weight of around 1000 and hard segment domains in its molecular chains, in combination with a polyester polyol and with a reactive thinner, like the hexane diol diacrylate (HDDA), allows getting a gloss which may be adapted to cover a large gloss range, i.e. from 3 to 30.

The varnish composition is applied on the PVC-based material 1 and is partially cured under Nitrogen using a first curing device 3 with a monochromatic radiation having a wavelength comprised between 170 and 174 nm, preferably a wavelength of 172 nm from a Xenon lamp. Due to limited penetration of this radiation, only the upper layer of the varnish composition is cured, over a thickness of 0.1 to 0.3µm. The rest of the thickness of the varnish composition still remains liquid. As a consequence, the upper surface of the varnish layer 2 presents a shrinkage pattern which diffuses the light and generates low gloss aspect.

The partially cured varnish layer 2 is then cured through the remaining thickness of said varnish layer 2 using a second curing device 4 with an ultraviolet radiation having a wavelength comprised between 200 nm and 320 nm.

Preferably the second curing of the varnish layer 2 is performed using a high pressure Hg/UV radiation, preferably produced by a mercury arc lamp.

Compared to polyurethane-based varnish composition comprising an urethane acrylate oligomer (table 1), submitted to the same curing conditions, varnish compositions according to the invention offer additional performance in the form of a better gloss control, a better VOCs barrier layer property and a better indentation-acoustic compromise.

The gloss, the mechanical and stain properties, the VOCs barrier property were assessed for compositions used as comparative examples (table 1) and compositions according to the invention (table 2).

Gloss comparison between compositions used as comparative examples (table 1) and compositions according to the invention (table 2) is given in table 3. The gloss is measured with a Byk/Gardner glossmeter at an angle of incidence of 60°.

**Table 3: Gloss, measured at 60°, of the varnish layer having the composition of tables 1 and 2.**

| | F1 | F2 | F3 | F4 | F5 | F6 | F7 |
|---|---|---|---|---|---|---|---|
| Gloss | 5 | 5 | 5 | 30 | 15 | 5 | 5 |

From table 3, it appears that for the compositions used as comparative examples, the first curing using a monochromatic radiation having a wavelength of around 172 nm followed by the second curing using ultraviolet radiation having a wavelength comprised between 200 nm and 320 nm allows to obtain very low gloss level. While for compositions according to the invention the two step curing allows to get a large range gloss by adapting the amount of reactive thinner.

The stain resistance properties were assessed using a test reproducing household or hospital soiling and synthetic pigments soiling. A drop of soiling (liquid tar, shoe polish, marker and gouache paint for household soiling, iodine, betadine, picric acid based-liquid, i.e. Bouin liquid for hospital soiling and pigments in oil (Yellow 146 / Blue 670 / Red 500), in alcohol (Yellow 105 / Blue 644 / Red 335) and in water (Yellow 094 / Blue 762 / Red 316) for pigments soiling) is laid on the upper surface of the a surface covering 1 comprising the varnish layer 2 according to the invention. After a certain time depending on the type of the stain (table 4), the stain is removed with a paper tissue and washed with alcohol (isopropanol). The residual soiling is rated for seventeen soiling agents with a mark comprised between 1 and 5, "1" being the best result obtained (no or few soiling is remaining) and "5" being the worst result obtained (a lot of soiling is remaining). Individual ratings for each soiling agents are added, giving for soiling a total mark of "17" being the best result obtained and "85" being the worst.

**Table 4: contact time of soiling**

| soiling agents | Contact time |
|---|---|
| Shoe polish | 2H |
| Marker | 30mn |
| Liquid Tar | 30mn |
| Gouache | 24H |
| Iodine (2%) | 2mn |
| Betadine | 2H |
| Gentiane | 2H |
| Bouin | 2H |
| Synthetic pigments | 24H |

The mechanical resistance properties (scuff) were assessed using a test wherein the upper surface of a surface covering 1 with, or without, a 7µm thick varnish layer 2 according to the invention is scratched by means of a rubber pad. The residual marking is rated between 0 and 15, "0" being the best result obtained (no or few marks on the varnish layer), "15" being the worst result obtained (a lot of marks on the varnish layer).

The stain resistance and the mechanical resistance properties are given in table 5 for compositions of table 1 and table 2 submitted to the first and the second curing according to the invention.

**Table 5: Stain and scuff comparison.**

| | PVC without varnish layer | PVC + varnish layer composition F1 | PVC + varnish layer composition F4 |
|---|---|---|---|
| Stain | 60 | 19 | 19 |
| Scuff | 3 | 13 | 13 |

From table 5, it appears that for varnish compositions of tables 1 and 2, the first curing at 172 nm followed by the second curing between 200 nm and 320 nm gives very good stain and scuff performance in comparison to a PVC-based material without varnish layer.

The VOCs barrier property was assessed using a measure of VOCs emission according to ISO 16000-10. Surface covering samples with, or without, a 7 µm thick varnish layer according to the invention are put under the FLEC (Field and Laboratory Emission Cell) and fluxed with dry air. After 24h, the volatile compounds are collected in a Tenax tube, thermal desorbed and analysed by GC/MS. The VOCs emission is classified as TVOC (compounds having a carbon number between C₆ and C₁₆) and SVOC (compounds having a carbon number between C₁₆ and C₂₂). The results are given in table 6.

**Table 6: VOCs emission measurements**

| | PVC without a varnish layer | | PVC + varnish layer composition F1 | | PVC + varnish layer composition F4 | |
|---|---|---|---|---|---|---|
| VOC (µg/m³) after 3 days | TVOC | SVOC | TVOC | SVOC | TVOC | SVOC |
| | 700 | 190 | 50 | 80 | 1 | 2 |

From table 6, it appears that the first curing at 172 nm followed by the second curing between 200 nm and 320 nm of compositions used as comparative examples (table 1) does not offer to the surface covering a complete protection towards VOC emission, while the surface covering comprising the varnish layer according to the invention presents improved protection.

The residual indentation performances of a surface covering with, or without, a 7 µm thick varnish layer according to the invention is assessed by measuring according to NF EN 433 the residual indentation after having pressed the upper surface of the surface covering 1 with a stamp of 1 cm² under a pressure of 50 kg. After 150 minutes, the pressure is released and the depth of the residual indentation is measured.

The residual indentation performances of the varnish layer according to the invention are given in table 7.

**Table 7: Residual indentation**

| | PVC without a varnish layer | PVC + varnish layer composition F1 | PVC + varnish layer composition F4 |
|---|---|---|---|
| Static indentation (mm) after 150min | 0.2 | 0.1 | 0.06 |

From table 7, it appears that, in comparison to a surface covering 1 without a varnish layer 2, a urethane acrylate-based varnish layer 2 improves the residual indentation of the surface covering due to the higher modulus of the varnish layer. However, a surface covering 1 comprising the varnish layer 2 according to the invention presents a higher modulus and thus an improved indentation property.

The surface covering 1 according to the invention has a gloss controlled curable varnish layer 2 as top coating and presents outstanding performances in terms of surface protection, scratch and stains resistance, combined with excellent barrier properties to chemicals and gases, especially to VOCs.

## Claims

1. A method to produce a PVC-based surface covering comprising a varnish layer, said method comprising the steps of:
- providing a PVC-based surface covering (1),
- providing a varnish composition comprising a polyester acrylate resin and a polyester polyol resin, or a polyester resin comprising acrylate and polyol functions, or a polyester acrylate resin with grafted hydroxyl groups, a reactive thinner and at least one photo-initiator,
- applying said varnish composition on said PVC-based surface covering (1) to form a varnish layer (2) having a thickness of between 5 and 15 µm,
- partially curing said varnish composition over a thickness of 0.1 to 0.3 µm using a monochromatic radiation having a wavelength comprised between 170 to 174 nm to form a partially cured varnish layer,
- further curing said varnish composition over the remaining thickness of said varnish layer using a ultraviolet radiation having a wavelength comprised between 200 and 320 nm.

2. The method according to claim 1, wherein the varnish composition comprises a least one reticulation activator of the varnish composition.

3. The method according to claim 1 or claim 2, wherein the varnish composition comprises a least one additive to adjust the gloss level of the varnish layer.

4. The method according to any of the preceding claims, wherein the varnish composition comprises at least one filler and/or at least one wetting agent.

5. The method according to any of the preceding claims, wherein the polyester acrylate resin and the polyester polyol resin, or the polyester resin comprising acrylate and polyol functions, or the polyester acrylate resin with grafted hydroxyl groups represent between 40 and 60% in weight of the total weight of the varnish composition.

6. The method according to any of the preceding claims, wherein the reactive thinner represents between 40 and 60 % in weight of the total weight of the varnish composition.

7. The method according to any of the preceding claims, wherein the photo-initiator represents between 0.1 and 20 % in weight of the total weight of the varnish composition.

8. The method according to any of the preceding claims, wherein the varnish composition has a viscosity of between 0.2 to 1.0 Pas.

9. The method according to any of the preceding claims, wherein the varnish composition is applied on the PVC-based surface covering (1) at a weight comprised between 5 to 20 g/m².

10. The method according to any of the preceding claims, wherein the step of further curing the varnish composition over the remaining thickness is performed using a ultraviolet radiation having a wavelength of around 240 nm.

11. The method according to any of the preceding claims, wherein the PVC-based surface covering (1) is a multiple layer material comprising a PVC-based support layer, a PVC-based wear layer, and preferably a decorative layer.

12. A PVC-based surface covering obtained by the process according to any of the claims 1 to 12.

13. A PVC-based surface covering (1) comprising a varnish layer (2) overlying said PVC-based surface covering (1), said varnish layer (2) comprising a network of polyester acrylate and a polyester polyol resin, or of a polyester resin comprising acrylate and polyol functions, or of a polyester acrylate resin with grafted hydroxyl groups, said varnish layer having a reticulation level of between 90 to 95 % over a thickness of 0.1 to 0.3 µm, and having a gloss level, measured at 60 degrees, of between 3 to 30.

14. The PVC-based surface covering (1) according to claim 13, comprising a PVC-based support layer, a decorative layer overlying said support layer and a PVC-based wear layer overlying said de decorative layer.

15. The PVC-based surface covering (1) according to claim 14, wherein the PVC-based support layer is a foamed layer.

## Patentansprüche

1. Verfahren zur Herstellung eines auf PVC basierenden Oberflächenbelags mit einer Lackschicht, wobei das Verfahren folgende Schritte umfasst:
- Bereitstellen eines auf PVC basierenden Oberflächenbelags (1),
- Bereitstellen einer Lackzusammensetzung, die ein Polyesteracrylatharz und ein Polyesterpolyolharz oder ein Polyesterharz mit Acrylat- und Polyolfunktionen oder ein Polyesteracrylatharz mit aufgepfropften Hydroxylgruppen, ein reaktives Verdünnungsmittel und mindestens einen Photo-initiator umfasst,
- Aufbringen der Lackzusammensetzung auf den auf PVC basierenden Oberflächenbelag (1) zur Bildung einer Lackschicht (2) mit einer Dicke zwischen 5 und 15 µm,
- teilweises Härten der Lackzusammensetzung über eine Dicke von 0,1 bis 0,3 µm unter Verwendung einer monochromatischen Strahlung mit einer Wellenlänge zwischen 170 und 174 nm zur Bildung einer teilweise gehärteten Lackschicht,
- weiteres Härten der Lackzusammensetzung über die restliche Dicke der Lackschicht unter Verwendung einer Ultraviolettstrahlung mit einer Wellenlänge zwischen 200 und 320 nm.

2. Verfahren nach Anspruch 1, bei dem die Lackzusammensetzung mindestens einen Vernetzungsaktivator für die Lackzusammensetzung umfasst.

3. Verfahren nach Anspruch 1 oder Anspruch 2, bei dem die Lackzusammensetzung mindestens ein Additiv zur Einstellung des Glanzniveaus der Lackschicht umfasst.

4. Verfahren nach einem der vorhergehenden Ansprüche, bei dem die Lackzusammensetzung mindestens einen Füllstoff und/oder mindestens ein Netzmittel umfasst.

5. Verfahren nach einem der vorhergehenden Ansprüche, bei dem das Polyesteracrylatharz und das Polyesterpolyolharz oder das Polyesterharz mit Acrylat- und Polyolfunktionen oder das Polyesteracrylatharz mit aufgepfropften Hydroxylgruppen zwischen 40 und 60 Gew.-% des Gesamtgewichts der Lackzusammensetzung ausmachen.

6. Verfahren nach einem der vorhergehenden Ansprüche, bei dem das reaktive Verdünnungsmittel zwischen 40 und 60 Gew.-% des Gesamtgewichts der Lackzusammensetzung ausmacht.

7. Verfahren nach einem der vorhergehenden Ansprüche, bei dem der Photoinitiator zwischen 0,1 und 20 Gew.-% des Gesamtgewichts der Lackzusammensetzung ausmacht.

8. Verfahren nach einem der vorhergehenden Ansprüche, bei dem die Lackzusammensetzung eine Viskosität zwischen 0,2 und 1, 0 Pas aufweist.

9. Verfahren nach einem der vorhergehenden Ansprüche, bei dem die Lackzusammensetzung in einem Gewicht zwischen 5 bis 20 g/m² auf den auf PVC basierenden Oberflächenbelag (1) aufgebracht wird.

10. Verfahren nach einem der vorhergehenden Ansprüche, bei dem der Schritt des weiteren Härtens der Lackzusammensetzung über die restliche Dicke unter Verwendung einer Ultraviolettstrahlung mit einer Wellenlänge von etwa 240 nm durchgeführt wird.

11. Verfahren nach einem der vorhergehenden Ansprüche, bei dem es sich bei dem auf PVC basierenden Oberflächenbelag (1) um ein mehrschichtiges Material mit einer auf PVC basierenden Trägerschicht, einer auf PVC basierenden Nutzschicht und vorzugsweise einer Dekorschicht handelt.

12. Auf PVC basierender Oberflächenbelag, erhalten durch das Verfahren nach einem der Ansprüche 1 bis 12.

13. Auf PVC basierender Oberflächenbelag (1) mit einer über dem auf PVC basierenden Oberflächenbelag (1) liegenden Lackschicht (2), wobei die Lackschicht (2) ein Netzwerk von Polyesteracrylat und einem Polyesterpolyolharz oder von einem Polyesterharz mit Acrylat- und Polyolfunktionen oder von einem Polyesteracrylatharz mit aufgepfropften Hydroxylgruppen umfasst, wobei die Lackschicht ein Vernetzungsniveau von 90 bis 95% über eine Dicke von 0,1 bis 0,3 µm und ein bei 60 Grad gemessenes Glanzniveau von 3 bis 30 aufweist.

14. Auf PVC basierender Oberflächenbelag (1) nach Anspruch 13 mit einer auf PVC basierenden Trägerschicht, einer über der Trägerschicht liegenden Dekorschicht und einer über der Dekorschicht liegenden auf PVC basierenden Nutzschicht.

15. Auf PVC basierender Oberflächenbelag (1) nach Anspruch 14, wobei es sich bei der auf PVC basierenden Trägerschicht um eine geschäumte Schicht handelt.

## Revendications

1. Procédé de fabrication d'un revêtement de surface à base de PVC comprenant une couche de vernis, ledit procédé comprenant les étapes qui consistent à :
- fournir un revêtement de surface à base de PVC (1),
- fournir une composition de vernis comprenant une résine de polyester-acrylate et une résine de polyester-polyol, ou une résine de polyester comprenant des fonctions acrylate et polyol, ou une résine de polyester-acrylate comportant des groupes hydroxyle greffés, un diluant réactif et au moins un photoinitiateur,
- appliquer ladite composition de vernis sur ledit revêtement de surface à base de PVC (1) pour former une couche de vernis (2) ayant une épaisseur de 5 µm à 15 µm,
- durcir en partie ladite composition de vernis sur une épaisseur de 0,1 µm à 0,3 µm en utilisant un rayonnement monochromatique ayant une longueur d'onde de 170 nm à 174 nm pour former une couche de vernis partiellement durcie,
- durcir davantage ladite composition de vernis sur le reste de l'épaisseur de ladite couche de vernis en utilisant un rayonnement ultraviolet ayant une longueur d'onde de 200 nm à 320 nm.

2. Procédé selon la revendication 1, dans lequel la composition de vernis comprend au moins un activateur de réticulation de la composition de vernis.

3. Procédé selon la revendication 1 ou la revendication 2, dans lequel la composition de vernis comprend au moins un additif pour ajuster le niveau de brillant de la couche de vernis.

4. Procédé selon l'une quelconque des revendications précédentes, dans lequel la composition de vernis comprend au moins une charge et/ou au moins un agent mouillant.

5. Procédé selon l'une quelconque des revendications précédentes, dans lequel la résine de polyester-acrylate et la résine de polyester-polyol, ou la résine de polyester comprenant des fonctions acrylate et polyol, ou la résine de polyester-acrylate comportant des groupes hydroxyle greffés, représentent de 40 % à 60 % en poids du poids total de la composition de vernis.

6. Procédé selon l'une quelconque des revendications précédentes, dans lequel le diluant réactif représente de 40 % à 60 % en poids du poids total de la composition de vernis.

7. Procédé selon l'une quelconque des revendications précédentes, dans lequel le photoinitiateur représente de 0,1 % à 20 % en poids du poids total de la composition de vernis.

8. Procédé selon l'une quelconque des revendications précédentes, dans lequel la composition de vernis a une viscosité de 0,2 Pas à 1,0 Pas.

9. Procédé selon l'une quelconque des revendications précédentes, dans lequel la composition de vernis est appliquée sur le revêtement de surface à base de PVC (1) à un poids de 5 g/m² à 20 g/m².

10. Procédé selon l'une quelconque des revendications précédentes, dans lequel l'étape qui consiste à durcir davantage la composition de vernis sur le reste de l'épaisseur est réalisée en utilisant un rayonnement ultraviolet ayant une longueur d'onde d'environ 240 nm.

11. Procédé selon l'une quelconque des revendications précédentes, dans lequel le revêtement de surface à base de PVC (1) est un matériau multicouche comprenant une couche de support à base de PVC, une couche d'usure à base de PVC, et préférablement une couche décorative.

12. Revêtement de surface à base de PVC obtenu par le procédé selon l'une quelconque des revendications 1 à 12.

13. Revêtement de surface à base de PVC (1) comprenant une couche de vernis (2) recouvrant ledit revêtement de surface à base de PVC (1), ladite couche de vernis (2) comprenant un réseau d'une résine de polyester-acrylate et d'une résine de polyester-polyol, ou d'une résine de polyester comprenant des fonctions acrylate et polyol, ou d'une résine de polyester-acrylate comportant des groupes hydroxyle greffés, ladite couche de vernis ayant un niveau de réticulation de 90 % à 95 % sur une épaisseur de 0,1 µm à 0,3 µm, et ayant un niveau de brillant, mesuré à 60 degrés, de 3 à 30.

14. Revêtement de surface à base de PVC (1) selon la revendication 13, comprenant une couche de support à base de PVC, une couche décorative recouvrant ladite couche de support, et une couche d'usure à base de PVC recouvrant ladite couche décorative.

15. Revêtement de surface à base de PVC (1) selon la revendication 14, dans lequel la couche de support à base de PVC est une couche expansée.
